# EUROPEAN PATENT SPECIFICATION

(11) **EP 0 880 187 B1**
(45) Date of publication and mention of the grant of the patent: **24.11.2004**
(21) Application number: 98109095.4
(22) Date of filing: 19.05.1998
(51) Int. Cl.: H01M 4/48, H01M 4/58

(54) **Non-aqueous electrolyte secondary battery**
Sekundärbatterie mit nichtwässrigem Elektrolyten
Batterie secondaire à électrolyte non-aqueux

(30) Priority: 22.05.1997 JP 13229897
(43) Date of publication of application: 25.11.1998
(73) Proprietor: Matsushita Electric Industrial Co., Ltd., Kadoma-shi, Osaka 571-8501 (JP)
(72) Inventor: Sato, Toshitada, Kadoma City, 571-0064 (JP); Bito, Yasuhiko, Minamikawachi-gun, Osaka Pref. 587-0032 (JP); Murata, Toshihide, Izumiotsu City, 595-0072 (JP); Ito, Shuji, Akashi-City, 674-0056 (JP); Matsuda, Hiromu, Kawabe-gun, Hyogo Pref. 666-0261 (JP); Toyoguchi, Yoshinori, Yao City, 581-0003 (JP)
(74) Representative: Schirdewahn, Jürgen

(56) References cited:
- EP-A- 0 380 058
- EP-A- 0 594 965
- EP-A- 0 615 296
- EP-A- 0 668 621
- EP-A- 0 762 521
- EP-A- 0 825 661
- WO-A-94/25398
- WO-A-96/17392
- WO-A-98/02929
- FR-A- 2 725 709
- FR-A- 2 730 988
- US-A- 5 378 560
- CHEMICAL ABSTRACTS, vol. 122, no. 14, 3 April 1995 (1995-04-03) Columbus, Ohio, US; abstract no. 165589, MAEDA, TAKESHI ET AL: "Nonaqueous electrolyte secondary batteries" XP002121091 -& PATENT ABSTRACTS OF JAPAN vol. 1995, no. 03, 28 April 1995 (1995-04-28) & JP 06 338325 A (SANYO ELECTRIC CO LTD), 6 December 1994 (1994-12-06) -& JP 06 338325 A (SANYO ELECTRIC CO, JAPAN) 6 December 1994 (1994-12-06)
- CHEMICAL ABSTRACTS, vol. 127, no. 14, 6 October 1997 (1997-10-06) Columbus, Ohio, US; abstract no. 193122, AIDA, KENSUKE ET AL: "Nonaqueous lithium secondary batteries using amorphous chalcogenide anodes" XP002121273 -& PATENT ABSTRACTS OF JAPAN vol. 1997, no. 12, 25 December 1997 (1997-12-25) & JP 09 213329 A (FUJI PHOTO FILM CI LTD), 15 August 1997 (1997-08-15) -& JP 09 213329 A (FUJI PHOTO FILM CO., LTD., JAPAN) 15 August 1997 (1997-08-15)
- PATENT ABSTRACTS OF JAPAN vol. 1996, no. 12, 26 December 1996 (1996-12-26) -& JP 08 203526 A (FUJI PHOTO FILM CO LTD), 9 August 1996 (1996-08-09) -& US 5 707 756 A (KAGAWA YOSHIKATSU ET AL) 13 January 1998 (1998-01-13)
- PATENT ABSTRACTS OF JAPAN vol. 013, no. 207 (E-758), 16 May 1989 (1989-05-16) & JP 01 024369 A (MATSUSHITA ELECTRIC IND CO LTD), 26 January 1989 (1989-01-26)
- PATENT ABSTRACTS OF JAPAN vol. 009, no. 126 (E-318), 31 May 1985 (1985-05-31) & JP 60 012677 A (MATSUSHITA DENKI SANGYO KK), 23 January 1985 (1985-01-23)
- PATENT ABSTRACTS OF JAPAN vol. 1995, no. 03, 28 April 1995 (1995-04-28) & JP 06 349491 A (FUJI PHOTO FILM CO LTD), 22 December 1994 (1994-12-22)

## Description

### BACKGROUND OF THE INVENTION

The present invention relates to a non-aqueous electrolyte secondary battery, particularly an improvement of a negative electrode used therefor.

There have been various vigorous studies on a non-aqueous electrolyte secondary battery including lithium or a lithium compound as a negative electrode, because it is to be expected to offer a high voltage as well as a high energy density.

To date, oxides and chalcogens of transition metals like LiMn₂O₄, LiCoO₂, LiNiO₂, V₂O₅, Cr₂O₅, MnO₂, TiS₂, MoS₂ and the like are known positive electrode active materials for non-aqueous electrolyte secondary batteries. Those compounds have a layered or tunneled crystal structure that allows free intercalation and deintercalation of lithium ions. On the other hand, there are many previous studies on metallic lithium as the negative electrode active material. However, metallic lithium has a drawback that when used as the negative electrode active material, a deposition of lithium dendrites occurs on the surface of lithium during charging, which reduces charge/discharge efficiency or causes internal short-circuiting due to contact between formed lithium dendrites and the positive electrode. As one measure for solving such drawback, the use of a lithium alloy such as lithium-aluminum alloy which not only suppresses the growth of lithium dendrites but also can absorb therein and desorb therefrom lithium as the negative electrode has been under investigation. However, the use of such lithium alloy has a drawback that repeated charge/discharge operation causes pulverization of the alloy as the electrode, which in turn deteriorates the cycle life characteristics of a battery.

Therefore, there are proposals to suppress pulverization of the electrode by using a lithium-aluminum alloy including additional elements as electrode (e.g., Japanese Laid-Open Patent Publications Sho 62-119856 and Hei 4-109562). Under the circumstance, however, the improvement remains unsatisfactory. At present, lithium ion batteries have been put into practical use that include as the negative electrode a highly safe carbon material capable of reversibly absorbing and desorbing lithium and having exceptional cycle life characteristics although smaller in capacity than the above-mentioned negative electrode active materials. In an attempt to realize a higher capacity, various proposals have been made of an application of oxides to negative electrodes. For example, it is suggested in Japanese Laid-Open Patent Publications Hei 7-122274 and Hei 7-235293 that crystalline oxides such as SnO and SnO₂ may serve as negative electrode active materials with higher capacities than the conventional oxide WO₂. There is another proposal in Japanese Laid-Open Patent Publication Hei 7-288123 to use non-crystalline oxides such as SnSiO₃ or SnSi₁₋ₓPₓO₃ for the negative electrode in order to improve the cycle life characteristics. But, the improvement is still unsatisfactory.

### BRIEF SUMMARY OF THE INVENTION

The primary object of the present invention is to provide a negative electrode for non-aqueous electrolyte secondary batteries having excellent charge/discharge cycle life characteristics.

Another object of the present invention is to provide a negative electrode affording a high electric capacity and an exceptional cycle life by absorbing lithium upon charging without growing lithium dendrites

The present invention provides a non-aqueous electrolyte secondary battery comprising a chargeable and dischargeable positive electrode, a non-aqueous electrolyte and a chargeable and dischargeable negative electrode, wherein the negative electrode comprises a compound represented by the formula as claimed in claim 1.

Further, preferred embodiements are described in dependent claims 2-5.

### BRIEF DESCRIPTION OF SEVERAL VIEWS OF THE DRAWING

FIG. 1 is a brief longitudinal cross-sectional view of a test cell for evaluating the characteristics of an electrode of an active material in accordance with the present invention.
FIG. 2 is a longitudinal cross-sectional view of a cylindrical battery used for embodying the present invention.
FIG. 3 is an X-ray diffraction pattern obtained from a negative electrode active material of a test cell upon cathode polarization at the 10th cycle.

### DETAILED DESCRIPTION OF THE INVENTION

According to the present invention, a highly reliable non-aqueous electrolyte secondary battery with a high energy density as well as an exceptional cycle life which is free from development of dendrite-induced short-circuiting.

In the following, the present invention will be described referring to specific examples, although the present invention is not limited thereto.

### Example 1 (* according to the invention)

In the present example, compounds or oxides represented by the formula (1) and whose X is oxygen were evaluated.

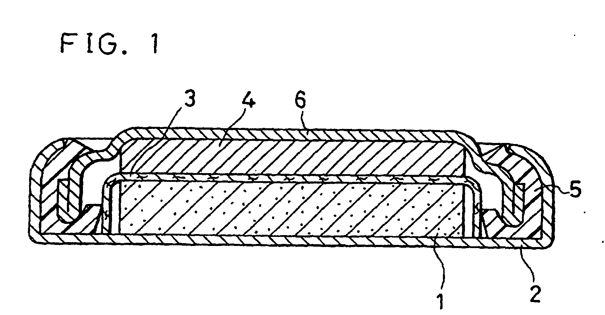

First, for evaluation of the electrode characteristics of those oxides as negative electrode active materials, test cells as shown in FIG. 1 were fabricated.

A mixture was prepared by mixing 3 g of a graphite powder as a conductive agent and 1 g of a polyethylene powder as a binder with 6 g of each active material powder. Then, 0.1 g of the mixture was pressure-molded to a disc of 17.5 mm in diameter. An electrode 1 thus formed was placed in the center of a case 2 and disposed thereon with a separator 3 of a microporous polypropylene film. A non-aqueous electrolyte prepared by dissolving 1 mol/l lithium perchlorate (LiClO₄) in a mixed solvent of ethylene carbonate and dimethoxyethane in a volumetric ratio of 1:1 was injected over the separator 3. Next, the case 2 was combined with a sealing plate 6 having a polypropylene gasket 5 on the periphery thereof and attached with a metallic lithium disc 4 of 17.5 mm in diameter to the inner surface thereof, then was sealed to complete a test cell.

Each of the test cells thus produced was subjected to cathode polarization (corresponding to charging when the active material electrode is taken as the negative electrode) at a constant current of 2 mA until the electrode potential became 0 V vs. lithium counter electrode. Then, the test cell was subjected to anode polarization (corresponding to discharging) until the electrode potential dropped to 1.5 V vs. lithium counter electrode. Cathode and anode polarizations were repeated and the electrode characteristics were evaluated in all the test cells.

For comparison, conventional oxides and sulfides of metals listed in Table 1 were used.

The present example used those oxides listed in Table 2.

The discharge capacities per gram of the active material at the 1st cycle in the test cells are summarized in Tables 1 and 2, respectively.

All of the test cells including oxides of Example 1 in accordance with the present invention were found chargeable and dischargeable. Upon completion of cathode polarization at the 10th cycle, the test cells were disassembled and found to have no deposits of metallic lithium.

The above results indicated that the electrodes including the active materials in accordance with the present invention absorb therein lithium upon cathode polarization and desorb therefrom absorbed lithium upon anode polarization without growing dendrites of metallic lithium.

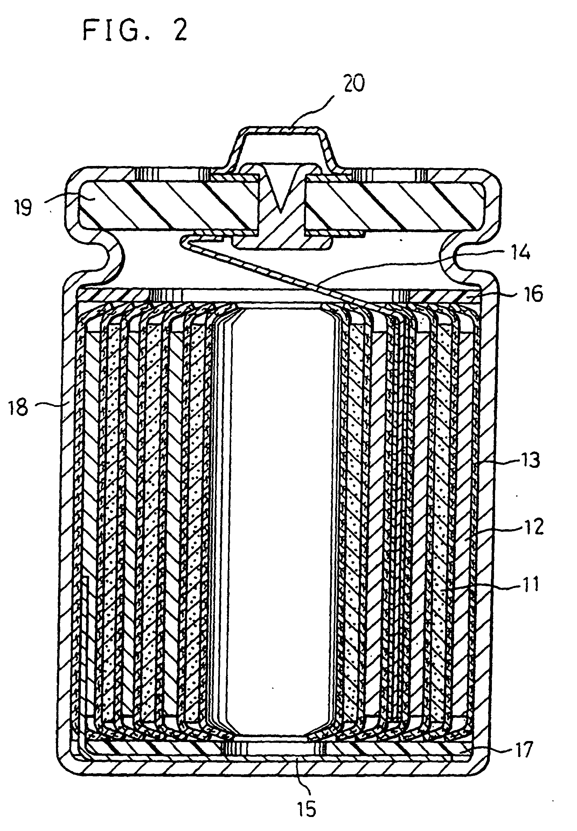

Next, for evaluation of the cycle life characteristics of the batteries applied with the negative electrodes of the active materials in accordance with the present invention, cylindrical batteries as shown in FIG. 2 were produced.

The batteries were produced as follows:

First, a positive electrode active material LiMn_{1.8}Co_{0.2}O₄ was synthesized by mixing Li₂CO₃, Mn₃O₄ and CoCO₃ in a predetermined molar ratio, followed by heating at 900 °C. The resultant was further filtered through 100 mesh or less before used as the positive electrode active material of Example 1.

Then, to 100 g of the positive electrode active material, 10 g of a carbon powder as a conductive agent, 8 g (in solids) of an aqueous dispersion of polytetrafluoroethylene as a binder and pure water were added to form a paste. The paste was applied on a titanium core material, dried and rolled. In this way, a positive electrode plate was produced.

Separately, a negative electrode plate was prepared as follows: Each of various active materials, a graphite powder as a conductive agent and polytetrafluoroethylene as a binder were mixed in a weight ratio of 60:30:10 and the mixture was made into a paste using a petroleum solvent. The paste was applied on a copper core material, followed by drying at 100 °C to form a negative electrode plate. A porous polypropylene film was used as the separator.

Then, a positive electrode plate 11 having a spot-welded positive electrode lead 14 made of the same material as that of the core material was combined with a negative electrode plate 12 similarly having a spot-welded negative electrode lead 15 made of the same material as that of the core material together with a band-like separator 13 of a porous polypropylene film interposed therebetween and the combination was spirally rolled up to make an electrode group. The electrode group was placed in a battery case 18 after adhering polypropylene insulating plates 16 and 17 to the top and the bottom of the electrode group. A step was formed at the upper part of the battery case 18 and a non-aqueous electrolyte prepared by dissolving 1 mol/l lithium perchlorate in a mixed solvent of ethylene carbonate and dimethoxyethane in an equivolumetric ratio was injected into the battery case 18. Then, the case was sealed using a sealing plate 19 provided with a positive terminal 20 to form a battery.

Each of the batteries thus formed was subjected to a charge/discharge cycle test under conditions of a temperature of 30 °C, a charge/discharge current of 1 mA/cm² and a charge/discharge voltage in a range of 4.3 to 2.6 V.

Tables 1 and 2 summarize the discharge capacity maintenance ratios after 100 cycles in the batteries including negative electrodes of the oxides of the comparative example and Example 1 according to the invention (*), using their discharge capacities at the 2nd cycle as preference.

**Table 1**

| Oxide or sulfide | Capacity (mAh/g) | Capacity maintenance rate (%) |
|---|---|---|
| WO₂ | 190 | 9 |
| Fe₂O₃ | 185 | 10 |
| SnO | 522 | 5 |
| SnSiO₃ | 453 | 20 |
| PbO | 453 | 2 |
| SnS | 498 | 6 |
| PbS | 436 | 3 |
| SnSi_{0.8}P_{0.2}O_{3.1} | 406 | 25 |

**Table 2**

| Oxides | Capacity (mAh/g) | Capacity maintenance rate (%) |
|---|---|---|
| Al₂BaO₄ | 390 | 85 |
| BaSnO₃ | 400 | 95 |
| BaSiO₃ | 400 | 85 |
| BaPbO₃ | 580 | 90 |
| BaCdO₂ | 390 | 80 |
| BaBi₂O₆ | 410 | 80 |
| BaIn₂O₄ | 530 | 85 |
| BaZnO₂ | 400 | 85 |
| BaGa₂O₄ | 400 | 90 |
| Ba₂GeO₄ | 500 | 90 |
| (*) Ba_{0.5}Sr_{0.5}SnO₃ | 600 | 95 |
| (*) Ba_{0.7}Sr_{0.3}SnO₃ | 620 | 95 |
| (*) Ba_{0.9}Sr_{0.1}SnO₃ | 630 | 95 |
| Ba_{0.5}Ca_{0.5}SnO₃ | 600 | 90 |
| Ba_{0.5}Mg_{0.5}SnO₃ | 580 | 90 |
| Ba_{0.5}Sr_{0.5}SiO₃ | 500 | 90 |
| Ba_{0.5}Sr_{0.5}PbO₃ | 620 | 90 |
| Al₂Na₂O₄ | 420 | 90 |
| Na₂SnO₃ | 400 | 90 |
| Na₂SiO₃ | 400 | 85 |
| Na₂PbO₃ | 600 | 80 |
| Na₂CdO₂ | 400 | 85 |
| Na₂Bi₂O₆ | 380 | 80 |
| Na₂In₂O₄ | 550 | 85 |
| Na₂ZnO₂ | 400 | 85 |
| Na₂Ga₂O₄ | 400 | 90 |
| Na₄GeO₄ | 500 | 85 |
| Al₂K₂O₄ | 430 | 90 |
| K₂SnO₃ | 450 | 90 |
| K₂SiO₃ | 420 | 90 |

| | | |
|---|---|---|
| (*) according to the invention | | |

As is evident from the tables, the batteries using the negative electrodes of the oxide active materials in accordance with the present invention are improved drastically in the cycle life characteristics as compared with those using the negative electrodes of the conventional oxides.

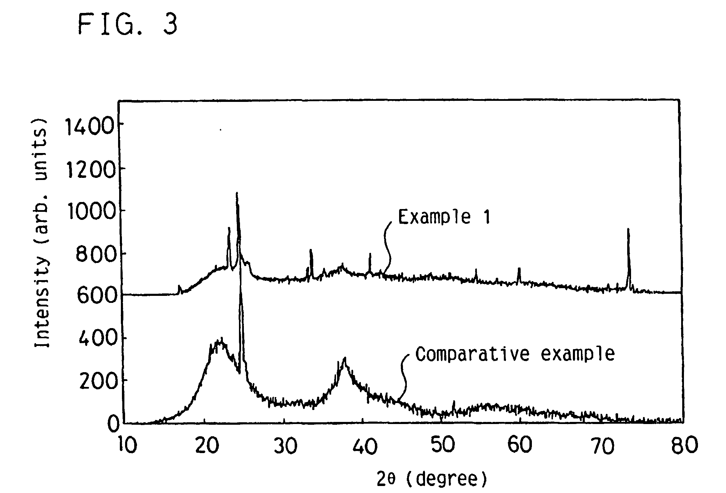

Next, the factor contributing to the improved cycle life characteristics of the above-mentioned active materials of the present invention was analyzed. FIG. 3 shows an X-ray diffraction pattern obtained from the test cell using MgSnO₂ as the negative electrode active material upon completion of cathode polarization (charged state of the negative electrode active material) at the 10th cycle. The figure also lists the result in the test cell using the comparative example active material SnO₂. Noting the peak around 2θ=38 °, a sharp peak clearly indicating the presence of an Li-Sn alloy was observed in the comparative example oxide. On the other hand, a very broad peak with a low peak intensity was observed in the oxide of Example 1.

The above findings suggested that the charge/discharge reaction in the comparative example oxide SnO₂ develops basically by the alloying reaction between Sn and Li. In the oxide MgSnO₃ of Example 1, although it was speculated that this oxide also experiences the same reaction, it shows a broad peak with very low peak intensity on the X-ray diffraction pattern as compared with the comparative example. This suggests very low crystallinity of the Li-Sn alloy synthesized during charge of MgSnO₃ as compared with the comparative example oxide SnO₂. Although the details remain to be clarified more, the low crystallinity was considered to result from the prevention by the presence of the group D element Mg of a reduction of the reactive surface area or inactivation due to an aggregation of the group A element Sn. This seems to have led to improved cycle life characteristics.

Although only MgSnO₃ was exemplified above, the same observations were obtained from the rest of the active materials.

### Example 2 (* according to the invention)

In the present example, test cells were produced in the same manner as in Example 1 for evaluation of the electrode characteristics of the negative electrode active materials of various sulfides listed in Table 3. The evaluation was performed under the same conditions as applied in Example 1. The results are summarized in Table 3.

All the test cells of Example 2 were found chargeable and dischargeable. Upon completion of cathode polarization at the 10th cycle, the test cells were disassembled and found to have no deposits of metallic lithium.

From this, it was indicated that the electrodes including the active materials in accordance with the present invention absorb therein lithium upon cathode polarization and desorb therefrom absorbed lithium upon anode polarization without growing dendrites of metallic lithium.

Next, for evaluation of the cycle life characteristics of the batteries applied with the negative electrodes of the various sulfides in accordance with the present invention, cylindrical batteries as used in Example 1 were produced and evaluated under the same conditions as in Example 1. The results according to the invention (*) are summarized in Table 3.

**Table 3**

| Sulfides | Capacity (mAh/g) | Capacity maintenance rate (%) |
|---|---|---|
| Al₂BaS₄ | 370 | 85 |
| BaSnS₃ | 410 | 95 |
| BaSiS₃ | 440 | 85 |
| BaPbS₃ | 450 | 90 |
| BaCdS₂ | 390 | 80 |
| BaBi₂S₆ | 400 | 80 |
| BaIn₂S₄ | 490 | 85 |
| BaZnS₂ | 400 | 85 |
| BaGa₂S₄ | 400 | 90 |
| Ba₂GeS₄ | 500 | 90 |
| (*) Ba_{0.5}Sr_{0.5}SnS₃ | 620 | 95 |
| (*) Ba_{0.1}Sr_{0.3}SnS₃ | 630 | 95 |
| (*) Ba_{0.9}Sr_{0.1}SnS₃ | 630 | 95 |
| Ba_{0.5}Ca_{0.5}SnS₃ | 580 | 90 |
| Ba_{0.5}Mg_{0.5}SnS₃ | 570 | 90 |
| Ba_{0.5}Sr_{0.5}SiS₃ | 500 | 90 |
| Ba_{0.5}Sr_{0.5}PbS₃ | 620 | 90 |
| Al₂Na₂S₄ | 390 | 90 |
| Na₂SnS₃ | 470 | 90 |
| Na₂SiS₃ | 420 | 85 |
| Na₂PbS₃ | 580 | 80 |
| Na₂CdS₂ | 400 | 85 |
| Na₂Bi₂S₆ | 380 | 80 |
| Na₂In₂S₄ | 520 | 85 |
| Na₂ZnS₂ | 370 | 85 |
| Na₂Ga₂S₄ | 400 | 90 |
| Na₄GeS₄ | 500 | 85 |
| Al₂K₂S₄ | 400 | 90 |
| K₂SnS₃ | 450 | 90 |
| K₂SiS₃ | 420 | 90 |

| | | |
|---|---|---|
| (*) according to the invention | | |

As is clear from Table 3, the batteries using the various sulfides in accordance with the present invention as the negative electrode active materials are improved in the cycle life characteristics as compared with those using the conventional negative electrode active materials.

### Example 3 (* according to the invention)

In Example 3, test cells were produced in the same manner as in Example 1 for evaluation of the electrode characteristics of the negative electrode active materials of various selenates listed in Table 4. The evaluation was performed under the same conditions as applied in Example 1. All the test cells of Example 3 were found chargeable and dischargeable. Upon completion of cathode polarization at the 10th cycle, the test cells were disassembled and found to have no deposits of metallic lithium.

From this, it was indicated that the electrodes including the active materials in accordance with the present invention absorb therein lithium upon cathode polarization and desorb therefrom absorbed lithium upon anode polarization without growing dendrites of metallic lithium.

Next, for evaluation of the cycle life characteristics of the batteries applied with the negative electrode active materials of various selenates in accordance with the present invention (*), cylindrical batteries as used in Example 1 were produced and evaluated under the same conditions as in Example 1. The results are summarized in Table 4.

**Table 4**

| Selenides | Capacity (mAh/g) | Capacity maintenance rate (%) |
|---|---|---|
| Al₂BaSe₄ | 390 | 85 |
| BaSnSe₃ | 400 | 95 |
| BaSiSe₃ | 400 | 85 |
| BaPbSe₃ | 580 | 90 |
| BaCdSe₂ | 390 | 80 |
| BaBi₂Se₆ | 410 | 80 |
| BaIn₂Se₄ | 530 | 85 |
| BaZnSe₂ | 400 | 85 |
| BaGa₂Se₄ | 400 | 90 |
| Ba₂GeSe₄ | 500 | 90 |
| (*) Ba_{0.5}Sr_{0.5}SnSe₃ | 600 | 95 |
| (*) Ba_{0.7}Sr_{0.3}SnSe₃ | 620 | 95 |
| (*) Ba_{0.9}Sr_{0.1}SnSe₃ | 630 | 95 |
| Ba_{0.5}Ca_{0.5}SnSe₃ | 600 | 90 |
| Ba_{0.5}Mg_{0.5}SnSe₃ | 580 | 90 |
| Ba_{0.5}Sr_{0.5}SiSe₃ | 500 | 90 |
| Ba_{0.5}Sr_{0.5}PbSe₃ | 620 | 90 |
| Al₂Na₂Se₄ | 420 | 90 |
| Na₂SnSe₃ | 400 | 90 |
| Na₂SiSe₃ | 4 00 | 85 |
| Na₂PbSe₃ | 600 | 80 |
| Na₂CdSe₂ | 400 | 85 |
| Na₂Bi₂Se₆ | 380 | 80 |
| Na₂In₂Se₄ | 550 | 85 |
| Na₂ZnSe₂ | 400 | 85 |
| Na₂Ga₂Se₄ | 400 | 90 |
| Na₄GeSe₄ | 500 | 85 |
| Al₂K₂Se₄ | 430 | 90 |
| K₂SnSe₃ | 450 | 90 |
| K₂SiSe₃ | 420 | 90 |

| | | |
|---|---|---|
| (*) According to the invention | | |

As is evident from Table 4, the batteries using the various selenates in accordance with the present invention as the negative electrode active materials are improved in the cycle life characteristics as compared with those using the conventional negative electrode active materials.

### Example 4 (* according to the invention)

In this example, test cells were produced in the same manner as in Example 1 for evaluation of the electrode characteristics of the negative electrode active materials of various tellurides listed in Table 5. The evaluation was performed under the same conditions as applied in Example 1. All the test cells of Example 4 were found chargeable and dischargeable. Upon completion of cathode polarization at the 10th cycle, the test cells were disassembled and found to have no deposits of metallic lithium.

From this, it was indicated that the electrodes including the active materials in accordance with the present invention absorb therein lithium upon cathode polarization and desorb therefrom absorbed lithium upon anode polarization without growing dendrites of metallic lithium.

Next, for evaluation of the cycle life characteristics of the batteries applied with the negative electrodes of various tellurides in accordance with the present invention (*), cylindrical batteries as used in Example 1 were produced and evaluated under the same conditions as in Example 1. The results are summarized in Table 5.

**Table 5**

| Tellurides | Capacity (mAh/g) | Capacity maintenance rate (%) |
|---|---|---|
| Al₂BaTe₄ | 390 | 85 |
| BaSnTe₃ | 400 | 95 |
| BaSiTe₃ | 400 | 85 |
| BaPbTe₃ | 580 | 90 |
| BaCdTe₂ | 390 | 80 |
| BaBi₂Te₆ | 410 | 80 |
| BaIn₂Te₄ | 530 | 85 |
| BaZnTe₂ | 400 | 85 |
| BaGa₂Te₄ | 500 | 90 |
| Ba₂GeTe₄ | 400 | 90 |
| (*) Ba_{0.5}Sr_{0.5}SnTe₃ | 600 | 95 |
| (*) Ba_{0.7}Sr_{0.3}SnTe₃ | 620 | 95 |
| (*) Ba_{0.9}Sr_{0.1}SnTe₃ | 630 | 95 |
| Ba_{0.5}Ca_{0.5}SnTe₃ | 600 | 90 |
| Ba_{0.5}Mg_{0.5}SnTe₃ | 580 | 90 |
| Ba_{0.5}Sr_{0.5}SiTe₃ | 500 | 90 |
| Ba_{0.5}Sr_{0.5}PbTe₃ | 620 | 90 |
| Al₂Na₂Te₄ | 420 | 90 |
| Na₂SnTe₃ | 400 | 90 |
| Na₂SiTe₃ | 400 | 85 |
| Na₂PbTe₃ | 600 | 80 |
| Na₂CdTe₂ | 400 | 85 |
| Na₂Bi2Te₆ | 380 | 80 |
| Na₂In₂Te₄ | 550 | 85 |
| Na₂ZnTe₂ | 400 | 85 |
| Na₂Ga₂Te₄ | 400 | 90 |
| Na₄GeTe₄ | 500 | 85 |
| Al₂K₂Te₄ | 430 | 90 |
| K₂SnTe₃ | 450 | 90 |
| K₂SiTe₃ | 420 | 90 |

| | | |
|---|---|---|
| (*) According to the invention | | |

As shown in Table 5, the batteries using the various tellurides in accordance with the present invention as the negative electrode active materials are improved in the cycle life characteristics as compared with those using the conventional negative electrode active materials.

Example 5

## Claims

1. A non-aqueous electrolyte secondary battery comprising a chargeable and dischargeable positive electrode, a non-aqueous electrolyte and a chargeable and dischargeable negative electrode, said negative electrode comprising a compound represented by the formula Ba₁₋ⱼSrⱼSn X₃ wherein X represents one element selected from the group consisting of O, S, Se and Te and wherein 0.1 ≤j ≤0.5.

2. The non-aqueous electrolyte secondary battery in accordance with claim 1 wherein said negative electrode compound is represented by the formula Ba₁₋ⱼSrⱼSnO₃ wherein 0.1 ≤j ≤0.5.

3. The non-aqueous electrolyte secondary battery in accordance with claim 1 wherein said negative electrode compound is represented by the formula Ba₁₋ⱼSrⱼSnS₃ wherein 0.1 ≤j ≤0.5.

4. The non-aqueous electrolyte secondary battery in accordance with claim 1 wherein said negative electrode compound is represented by the formula Ba₁₋ⱼSrⱼSnSe₃ wherein 0.1 ≤j ≤0.5.

5. The non-aqueous electrolyte secondary battery in accordance with claim 1 wherein said negative electrode compound is represented by the formula Ba₁₋ⱼSrⱼSnTe₃ wherein 0.1 ≤j ≤0.5.

## Patentansprüche

1. Sekundärbatterie mit nichtwässrigem Elektrolyten, umfassend eine ladbare und entladbare positive Elektrode, einen nichtwässrigen Elektrolyten und eine ladbare und entladbare negative Elektrode, wobei genannte negative Elektrode eine Verbindung umfasst, die durch die Formel Ba₁₋ⱼSrⱼSnX₃ dargestellt wird, in welcher X ein Element darstellt, ausgewählt aus der Gruppe bestehend aus O, S, Se und Te, und in welcher 0,1 ≤ j ≤ 0,5.

2. Sekundärbatterie mit nichtwässrigem Elektrolyten nach Anspruch 1, wobei die genannte Verbindung für die negative Elektrode dargestellt wird durch die Formel Ba₁₋ⱼSrⱼSnO₃, in welcher 0,1 ≤ j ≤ 0,5.

3. Sekundärbatterie mit nichtwässrigem Elektrolyten nach Anspruch 1, wobei die genannte Verbindung für die negative Elektrode dargestellt wird durch die Formel Ba₁₋ⱼSrⱼSnS₃, in welcher 0,1 ≤ j ≤ 0,5.

4. Sekundärbatterie mit nichtwässrigem Elektrolyten nach Anspruch 1, wobei die genannte Verbindung für die negative Elektrode dargestellt wird durch die Formel Ba₁₋ⱼSrⱼSnSe₃, in welcher 0,1 ≤ j ≤ 0,5.

5. Sekundärbatterie mit nichtwässrigem Elektrolyten nach Anspruch 1, wobei die genannte Verbindung für die negative Elektrode dargestellt wird durch die Formel Ba₁₋ⱼSrⱼSnTe₃, in welcher 0,1 ≤ j ≤ 0,5.

## Revendications

1. Batterie secondaire à électrolyte non-aqueux comprenant une électrode positive chargeable et déchargeable, un électrolyte non-aqueux et une électrode négative chargeable et déchargeable, ladite électrode négative comprenant un composant représenté par la formule Ba₁₋ⱼSrⱼSnX₃ dans laquelle X représente un élément sélectionné parmi le groupe constitué de O, S et Te et dans laquelle 0,1 ≤j ≤0,5.

2. Batterie secondaire à électrolyte non-aqueux selon la revendication 1 dans laquelle ledit composant d'électrode négative est représenté par la formule Ba₁₋ ⱼSrⱼSnO₃ dans laquelle 0,1 ≤j ≤0,5.

3. Batterie secondaire à électrolyte non-aqueux selon la revendication 1 dans laquelle ledit composant d'électrode négative est représenté par la formule Ba₁₋ ⱼSrⱼSnS₃ dans laquelle 0,1 ≤j ≤0,5.

4. Batterie secondaire à électrolyte non-aqueux selon la revendication 1 dans laquelle ledit composant d'électrode négative est représenté par la formule Ba₁₋ ⱼSrⱼSnSe₃ dans laquelle 0,1 ≤j ≤0,5.

5. Batterie secondaire à électrolyte non-aqueux selon la revendication 1 dans laquelle ledit composant d'électrode négative est représenté par la formule Ba₁₋ ⱼSrⱼSnTe₃ dans laquelle 0,1 ≤j ≤0,5.
